# FASCICULE DE BREVET EUROPEEN

(11) **EP 1 215 849 B1**
(45) Date de publication et mention de la délivrance du brevet: **23.05.2007**
(21) Numéro de dépôt: 01403198.3
(22) Date de dépôt: 11.12.2001
(51) Int. Cl.: H04L 12/28, H04L 12/56

(54) **Procédé et système pour échanger des informations entre une station de base principale et un cluster de stations mobiles**
Verfahren und System zum Austauschen von Informationen zwischen einer Hauptbasisstation und einer Gruppe von mobilen Stationen
Method and system for exchanging information between a principle base station and a cluster of mobile stations

(30) Priorité: 13.12.2000 FR 0016413
(43) Date de publication de la demande: 19.06.2002
(73) Titulaire: Thales, 75008 Paris (FR)
(72) Inventeur: Lagoutte, Pierre, Thales, 94117 Arcueil Cedex (FR)
(74) Mandataire: Lucas, Laurent Jacques

(56) Documents cités:
- ROYER E M ET AL: "MULTICAST OPERATION OF THE AD-HOC ON-DEMAND DISTANCE VECTOR ROUTING PROTOCOL" PROCEEDINGS OF THE 5TH ANNUAL ACM/IEEE INTERNATIONAL CONFERENCE ON MOBILE COMPUTING AND NETWORKING (MOBICOM'99), SEATTLE, WA, USA, 15 - 20 août 1999, pages 207-218, XP000896087 ISBN: 1-58113-142-9
- DUBE R ET AL: "SIGNAL STABILITY-BASED ADAPTIVE ROUTING (SSA) FOR AD HOC MOBILE NETWORKS" IEEE PERSONAL COMMUNICATIONS, vol. 4, no. 1, février 1997 (1997-02), pages 36-45, XP000679252 ISSN: 1070-9916

## Description

L'invention concerne un procédé et un système adaptés à échanger des informations entre une station de base principale et un ensemble de stations mobiles regroupées par exemple dans un " cluster ", un cluster et une station principale étant reliés au moyen d'une communication " longue portée ".

Elle s'applique notamment pour résoudre le problème de la connectivité globale d'une flotte de véhicules mobiles vis-à-vis d'une station de base principale et distante, en tirant le meilleur parti de la dispersion et de la connexité relative de ces véhicules, afin d'améliorer la qualité de la liaison radio entre la flotte de véhicules et la station principale. Les informations échangées se présentent par exemple sous forme de paquets ayant une adresse de destination, tels que des paquets de type IP.

Le terme " connectivité " désigne dans la présente invention un potentiel de connexion qui préexiste même en l'absence de transmission d'information. Dans la suite de la description, il est fait appel à la « connectivité interne » d'un cluster groupant plusieurs stations mobiles reliées entre elles par un moyen de communication de courte portée, pris comme un tout ; et la « connectivité externe » de ce cluster avec la station principale, via la liaison " longue portée ".

De manière plus générale, la présente invention s'applique dans un système comportant au moins une station principale en liaison par une communication " longue portée à un ou plusieurs clusters regroupant plusieurs stations mobiles communiquant au moyen de liaisons "courte portée".

Certains systèmes présentent une architecture de communication mobile organisée en plusieurs niveaux de communication, par exemple depuis une station principale contenant des données à disséminer, pour arriver jusqu'aux stations mobiles secondaires ayant pour fonction d'exécuter les informations en relation avec celles détenues et transmises par la station principale. Il est possible de définir ainsi trois niveaux de communication :
Niveau 1 : communication au sein même de la station secondaire mobile,
Niveau 2 : communication de courte portée entre plusieurs stations mobiles regroupées au sein d'un même réseau ou " cluster ",
Niveau 3 : communication de longue portée qui relie un cluster à une station principale, en contraste avec la communication de courte portée interne au cluster.

Une telle architecture de communication se retrouve, par exemple, dans un système de commandement comprenant un organe de décision supporté par la station principale :
1) le réseau "intra-véhicule" transporte les informations multiservices au sein d'un véhicule,
2) le réseau " inter-véhicule " permet les échanges à courte portée, par exemple kilométriques, entre les différents véhicules d'un même groupe ou cluster. Ce mode de fonctionnement peut être envisagé à l'arrêt ou en déplacement avec des performances différentes dans les deux cas,
3) le réseau de connectivité longue portée, par exemple de portée décakilométrique, raccorde le cluster de véhicules à la station principale. Cette connectivité externe doit être assurée en position fixe comme en déplacement, avec toutefois une qualité de service rendue différente dans ces deux cas.

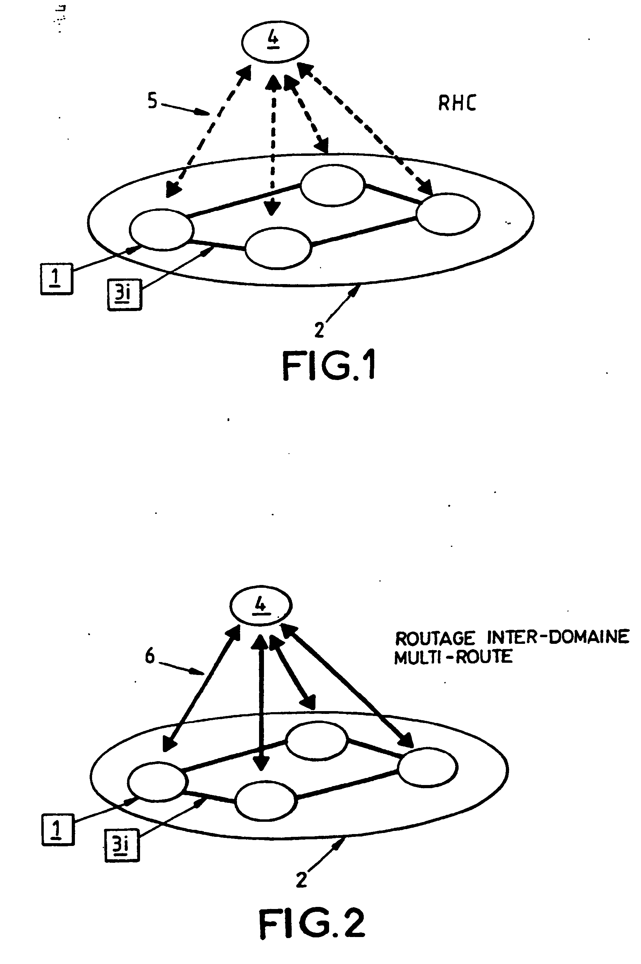

La figure 1 schématise une architecture de ce type où les véhicules 1, regroupés dans un cluster 2, communiquent entre eux via des artères 3i, le cluster étant relié à la station principale 4 au moyen d'un réseau longue portée 5 (RHC) dont le centre d'accès radio (CAR non représenté sur la figure) constitue le point d'entrée.

L'idée est de faire communiquer une ou plusieurs stations principales avec au moins un cluster de véhicules reliés entre eux par un LAS (abréviation anglo-saxonne de Local Area System).

Dans ce type d'architecture, chaque véhicule du cluster est équipé d'une part d'un moyen de transmission, tel qu'un réseau local de transmission, sans fil, inter-véhiculaire à haut débit au sein du cluster et d'autre part de moyens de communication comportant notamment un émetteur et un récepteur à longue distance vers la station principale (non représentés sur la figure pour des raisons de clarté).
Le document « Multicast operation of the ad-hoc on-demand distance vector routing protocol » décrit un réseau « ad hoc ». Il décrit une coopération entre plusieurs noeuds mobiles sans la nécessité de faire intervenir une infrastructure existante en un point d'accès centralisé.

La mise en oeuvre de l'invention repose notamment sur l'hypothèse suivante : la station principale et le réseau inter-station mobile d'un cluster sont, en première approximation, considérés chacun comme un réseau AS IP (abréviation anglo-saxonne de Autonomous System de l'architecture internet), ou réseau IP, administré par une seule entité munie d'un protocole interne de routage IP- IPG (Interior Gateway Protocol) s'interfaçant aux autres AS au moyen d'un protocole de type EPG (Exterior Gateway Protocom). Cette définition est conforme à celle de l'IETF. Il serait également possible de considérer chacun des deux réseaux comme des sous réseaux (par exemple des aires OSPF - en anglo-saxon Open Shortest Path First) d'un même AS IP.

Dans une première solution représentée à la figure 2, les deux AS (ou sous-réseaux) sont reliés par des liaisons 6 IP inter-AS (ou inter sous-réseaux). Le choix de la route optimale pour l'échange des informations est réglé par les protocoles inter-AS (ou inter sous-réseaux), selon les procédures standards connues de l'Homme du métier, qui arbitrent de la route optimale.

Cette solution présente toutefois comme inconvénient de devoir gérer une instabilité de la route instantanée. Le phénomène connu sous l'expression " route flapping " est inévitable et les ajustements afférents seront consommateurs de bande passante sur la liaison longue portée.

L'idée de l'invention repose sur une nouvelle approche qui consiste, notamment, à relier les deux domaines mentionnés, ou sous-réseaux, c'est à dire le cluster et la station principale par une liaison de type IP inter-domaine (ou inter sous-réseau) unique au niveau IP. Le routage ne voit alors qu'une seule route entre la station principale et l'ensemble du cluster. Les chemins de transmission alternatifs de cette route sont déterminés et gérés par le procédé et le système selon l'invention.

L'objet de l'invention concerne un procédé pour échanger des informations entre au moins un cluster comportant plusieurs stations mobiles et au moins une station principale, ou un réseau de zone, le ou les clusters étant en liaison avec le réseau de zone, au moyen d'une liaison longue portée. Il est caractérisé en ce qu'il comporte au moins une étape de transmission des informations entre le cluster et le réseau de zone à l'aide d'une voie de routage déterminée à partir d'une « connectivité interne » existante (LAN) entre les différentes stations mobiles et de moyens adaptés à déterminer au niveau de la réception par chaque station mobile d'un cluster et parmi un type d'informations données, la première information reçue correctement par une station mobile, à « désigner » la station mobile associée et à associer à cette station mobile le chemin inverse préféré à emprunter par toutes ou la majorité des informations à transmettre du cluster vers la station principale.

Les informations transmises se présentent par exemple sous un format de paquets de type paquets IP et les stations mobiles du cluster étant reliées au moyen d'une « connectivité interne » à haut débit, le procédé comporte par exemple les étapes suivantes :
a) Réceptionner au niveau de chaque station mobile, les paquets IP émis par la station principale ou le réseau de zone, et déterminer le premier paquet correctement reçu par le récepteur d'une station mobile, ledit premier paquet étant le paquet retenu Pr,
b) Identifier le récepteur associé au premier paquet retenu et l'émetteur correspondant de la station mobile,
c) Attribuer à ladite station mobile « identifiée », le chemin de retour préféré à emprunter par les différents paquets IP à émettre vers la station principale ou le réseau de zone, via la liaison longue portée.

La valeur du rapport du débit inter-station mobile et du débit du réseau longue portée peut être supérieure à 10.

Selon un mode de mise en oeuvre du procédé, l'étape a) pour déterminer le premier reçu des paquets consiste, par exemple, pour un type de paquets donné, à retenir le premier des paquets bien reçu et à rejeter les autres paquets identiques.

L'invention concerne aussi un système pour échanger des informations entre une station principale, ou un réseau de zone, et au moins un cluster comportant plusieurs stations mobiles reliées entre elles au moyen d'une connectivité interne. Il est caractérisé en ce qu'il comporte au moins une voie de transfert des informations déterminée à partir de la connectivité interne à haut débit entre les stations mobiles et des moyens adaptés à déterminer, pour un type d'information donné, la station mobile ayant reçu la « première information » et désigner la ou lesdites stations mobiles comme chemin préféré.

L'objet de l'invention concerne aussi un système pour échanger des informations entre un réseau de zone et au moins un cluster comportant plusieurs stations mobiles reliées entre elles, chaque station mobile étant équipée d'un dispositif de routage, d'un dispositif de transmission des informations comportant au moins un émetteur et un récepteur, ledit cluster étant relié au réseau de zone au moyen d'un réseau longue portée caractérisé en ce qu'il comporte au moins :
- une connectivité interne à haut débit entre les différentes stations mobiles
- un équipement adapté à discriminer parmi l'ensemble des paquets IP émis par le réseau de zone et reçus par chacun des récepteurs des stations mobiles, et pour un type de paquets donné, le premier paquet bien reçu de chacun d'entre eux et à désigner la station mobile ayant reçu ce premier paquet retenu Pr, comme « chemin de retour préféré » des paquets à destination du réseau de zone.

L'équipement de discrimination et d'attribution du "chemin de retour préféré" est par exemple un dispositif frontal implanté dans la fonction de routage constituée par l'ensemble des routeurs physiques de chacun des véhicules.

Le débit de la connectivité interne est par exemple de plusieurs fois le débit de la connectivité longue portée, de préférence la valeur du rapport du débit inter-stations mobiles et du débit du réseau longue portée est supérieure à 10.

Le système et le procédé selon l'invention sont avantageusement utilisés dans un système comportant un moyen de télécommunication supporté par la station principale ou le réseau de zone et plusieurs stations mobiles.

L'invention présente notamment les avantages suivants :
◆ Elle fiabilise la connectivité globale du cluster à la station principale, du fait de la redondance des moyens de transmission longue portée de chacun des véhicules ou stations mobiles du cluster. En effet, chacune des liaisons de la station principale vers le cluster, prise individuellement est fragile, soumise à l'évanescence du fait du brouillage d'une part et des difficultés de bilan de liaison d'autre part,
◆ Elle optimise la qualité de la connectivité externe du cluster à la station principale, en offrant la possibilité de sélectionner à tout moment la meilleure des liaisons survivantes disponibles. Par exemple, le meilleur couple {station mobile ; station principale} est choisi à tout moment pour échanger l'ensemble des informations sur la liaison longue portée,
◆ Le " route flapping ", phénomène correspondant à une instabilité de la route choisie du fait de l'existence de plusieurs routes possibles et de qualité rapidement variable pour effectuer la liaison entre la station principale et le cluster, est éliminé.

D'autres caractéristiques et avantages du procédé et du système selon l'invention apparaîtront à la lecture de la description qui suit donnée en référence aux figures où :
- la figure 1 est un schéma général d'une architecture de communication entre une station principale et un cluster regroupant différentes stations mobiles,
- la figure 2 représente une autre architecture de communication possible,
- la figure 3 montre un exemple d'architecture d'un système de communication selon l'invention, et
- la figure 4 représente l'agencement des moyens de communication et de routage au sein d'un véhicule.

Afin de mieux comprendre l'invention, l'exemple de réalisation donné ci-après à titre illustratif et nullement limitatif, est appliqué à un réseau de zone dédié par exemple à un commandement tactique ou stratégique, dont le point d'entrée (ou CAR - Centre d'Accès Radio) réfère la station principale de l'invention, et une flotte de véhicules comprenant plusieurs véhicules mobiles tactiques référant le cluster.

L'idée de l'invention est de gérer les chemins instantanés de transmission des informations entre le réseau de zone et la flotte de véhicule. La solution relève notamment des architectures connues de routage sur les internets, le réseau de zone et le réseau inter-véhicule de la flotte de véhicules étant considérés en première approximation comme deux AS IP (Autonomous System de l'architecture internet). Les informations se présentent par exemple sous la forme de paquets IP.

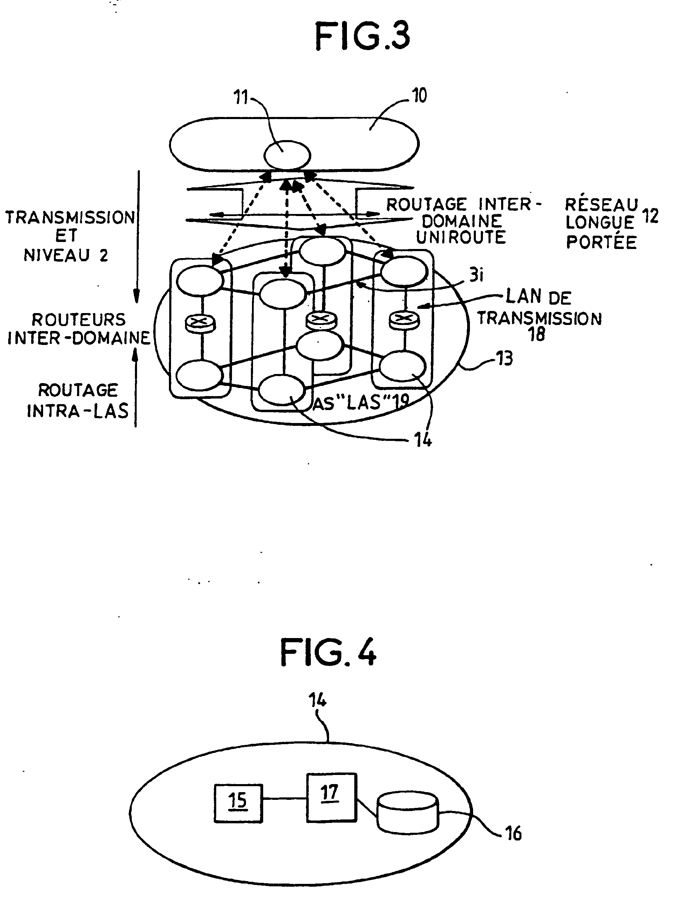

Le système de communication représenté à la figure 3 comporte un réseau de zone 10 comprenant un ou plusieurs centres d'accès radio 11.

Le réseau de zone 10 est en liaison par l'intermédiaire d'une liaison tactique longue portée 12 à une flotte de véhicules 13. Le réseau longue portée assure notamment une fonction de routage inter-domaine uniroute, c'est-à-dire, qu'il n'existe qu'une seule route ou voie de routage pour les informations échangées entre le réseau de zone et l'escadron.

La flotte de véhicules comporte plusieurs véhicules 14, constituant les noeuds d'un réseau local de transmission sans-fil, inter-véhiculaire à haut débit (18 désigné " LAN de transmission " équivalent à un réseau LAN - Local Area Network). Ce réseau est relié au moyen de la liaison tactique à longue portée 12 vers le réseau de zone. Un véhicule 14 peut être vu comme un noeud du cluster, dans lequel les moyens de transmission 15 comportent notamment un émetteur et un récepteur, non représentés pour des raisons de clarté, sont distincts des moyens de routage 16 (figure 4). Les moyens de routage comportent, par exemple, une table de routage et des protocoles de routage habituellement utilisés dans ce domaine technique des réseaux. Un dispositif frontal 17, tel qu'une carte interface sur laquelle est implanté un programme d'identification approprié, est disposé en série sur le flux en coupure entre les équipements de transmission et le routeur de chaque véhicule permet notamment de « marquer » le chemin inverse des paquets reçus par le véhicule, comme il est décrit ci-après.

Tout dispositif frontal 17 adapté à déterminer le premier paquet reçu en accord avec le procédé selon l'invention décrit ci-après et à marquer le chemin inverse des paquets reçus pour leur retransmission vers le réseau de zone peut être utilisé.

Les équipements de transmission du LAS supporté par le LAN offre une connectivité à haut débit entre les véhicules de la flotte de véhicule. Le LAN de transmission a en particulier comme fonction de transporter les informations reçues des centres de réception radio de l'ensemble des véhicules vers chacun des équipements de routage de chaque véhicule pour y être triées. Il supporte également les échanges IP au sein du LAS (19) interne du cluster (échange IP entre les véhicules de la flotte de véhicules).

Le débit inter-véhiculaire du LAS est potentiellement d'un ordre de grandeur supérieur à celui du réseau longue portée qui relie le cluster à la station principale. Par exemple le débit des artères 3i du LAS est de l'ordre de quelques MBps à 25 MBps et le débit de la liaison longue portée est inférieur à 1 MBps. De préférence, la valeur du rapport du débit inter-station mobile et du débit du réseau longue portée est supérieure à 10.

Le mot " routage " désigne la fonction logique formée par l'ensemble des routeurs de chaque véhicule du cluster. Elle est implantée physiquement en autant de routeurs qu'il y a de véhicules, chacun d'entre eux assurant également la connectivité à la flotte de véhicule des réseaux internes du véhicule dans lequel il réside. Les routeurs de chaque véhicule d'un cluster sont reliés logiquement entre eux par le LAN de transmission à haut débit.

Ce LAN de transmission offre une connectivité de niveau MAC (Medium Access Control en anglo-saxon), à haut débit entre les émetteurs/récepteurs équipant chacun des véhicules 14 et les routeurs 16 en charge de la connectivité à longue distance dans chacun des véhicules. Ces échanges peuvent être par exemple supportés par une construction logique constituée virtuellement à base de tunnels IP en overlay sur le LAS, ces expressions sont connues de l'Homme du métier et ne seront de fait pas détaillées dans la présente description.

Le système selon l'invention repose notamment sur une gestion des chemins instantanés de transmission qui utilisent, par exemple, un routage uni-route permettant la communication ou les échanges d'information entre un ou plusieurs centres d'accès radio d'un réseau de zone, ou d'une station principale point d'accès d'un réseau de zone, et un cluster déterminé.

Cette route unique est déterminée par exemple, en mettant en oeuvre les étapes suivantes :

### Etape 1

- relier les véhicules 14 du cluster 13 par des équipements de transmission et de commutation (au niveau MAC) offrant une connectivité à haut débit, de l'ordre de plusieurs MBps, appelés dans cet exemple de réalisation, " LAN de transmission " 18,

### Etape 2

- les informations émises par la station principale (le réseau de zone) sous la forme de paquets IP sont reçues en plusieurs exemplaires, depuis chacun des récepteurs des véhicules à portée de la station principale, par le niveau de routage. Chaque récepteur de véhicule va émettre les paquets Pi qu'il a reçus à destination des routeurs de la fonction de routage. S'il n'y pas d'obstacle, chaque véhicule reçoit et réémet vers le routage une copie identique de chaque paquet d'information émis par la station principale ou le réseau de zone. Il en résulte une duplication après réception au sein du LAN de transmission du cluster en autant d'exemplaires qu'il y a de véhicules dans le cluster. Les paquets pris en compte par le procédé sont les paquets « bien reçus » de préférence.

### Etape 3

- Le processus frontal 17 de chaque routeur au sein de chaque véhicule du cluster opère une fonction de réduction des doublons de la manière suivante par exemple,
   - La fonction de routage détermine le premier paquet correctement reçu, Pr, pour chaque type de paquets, Pi, et attribue à sa source émettrice, à savoir l'émetteur associé du véhicule ayant reçu le message ou les informations, le chemin de retour " préféré " vers la station principale. Le chemin " préféré " est le chemin vers l'émetteur du véhicule qui transmet les paquets ayant pour destination finale la station principale ou le réseau de zone. L'émetteur choisi pour réémettre les informations est celui du véhicule dont le récepteur est à l'origine du paquet d'information reçu le premier parmi tous les doublons. Par exemple, l'identification de la source (récepteur) est faite par un quelconque marquage du paquet IP envoyé au routage par le récepteur, par exemple, l'identifiant du tunnel IP (adresse source) le paquet reçu pour son acheminement vers le routeur.
   - Les doublons concernant un même type de paquet d'informations et arrivant après le premier paquet reçu retenu, Pr, sont rejetés au moyen de l'équipement frontal 17 disposé au niveau du routage. Ce dispositif frontal est situé, par exemple, au niveau de tous les routeurs physiques formant la fonction de routage.
   - Le chemin inverse emprunté par les paquets à émettre vers la station principale est mémorisé par le dispositif frontal 17 en coupure entre les équipements de transmission et le routeur de chaque véhicule, pour prendre en charge les paquets à émettre en retour.

Les paquets émis vers le CAR sont ainsi relayés vers le véhicule disposant de la meilleure réception instantanée et le meilleur canal de retour vers le CAR.

Sans sortir du cadre de l'invention, le système et le procédé selon l'invention sont utilisés pour l'échange d'informations ayant un format de type paquets comportant une adresse de destination, tels que des paquets IP ou encore de paquets datagrammes.

La fréquence de modification de décision de changement de route optimale entre le cluster et la station principale est de l'ordre du Hz.

## Revendications

1. -Procédé pour échanger des informations entre au moins un cluster (13) comportant plusieurs stations mobiles (14) et au moins une station principale, ou un réseau de zone (10), le ou les clusters (13) étant en liaison avec la station principale ou le réseau de zone (10), au moyen d'une liaison longue portée (12) **caractérisé en ce qu'**il comporte au moins une étape de transmission des informations de la station principale ou du réseau de zone (10) vers le cluster à l'aide d'une voie de routage déterminée à partir d'une connectivité interne existante (LAN) entre les différentes stations mobiles et de moyens (17) adaptés à déterminer au niveau de la réception par chaque station mobile (14) d'un cluster et parmi un type d'informations données, la première information reçue correctement par une station mobile, à identifier cette station mobile et à lui associer le chemin inverse préféré à emprunter par toutes ou la majorité des informations à transmettre du cluster vers la station principale, ou le réseau de zone.

2. - Procédé selon la revendication 1, **caractérisé en ce que** la valeur du rapport du débit inter-stations mobiles et du débit du réseau longue portée est supérieure à 10.

3. - Procédé selon l'une des revendications 1 ou 2, **caractérisé en ce que** les informations se présentent sous la forme de paquets de type paquets IP et les stations mobiles du cluster étant reliées au moyen d'une connectivité interne à haut débit, **en ce qu'**il comporte au moins les étapes suivantes :
a) Réceptionner au niveau de chaque station mobile (14), les paquets IP émis par la station principale, ou le réseau de zone (10), et déterminer le premier paquet correctement reçu par le récepteur d'une station mobile, ledit premier paquet étant le paquet retenu Pr,
b) Identifier le récepteur associé au premier paquet retenu et l'émetteur correspondant de la station mobile,
c) Attribuer à ladite station mobile identifiée, le chemin de retour préféré à emprunter par les différents paquets IP à émettre vers la station principale ou le réseau de zone, via la liaison longue portée.

4. - Procédé selon la revendication 1, **caractérisé en ce que** l'étape a) pour déterminer le premier reçu des paquets consiste, pour un type de paquets donné, à retenir le premier des paquets bien reçu et à rejeter les autres paquets identiques.

5. - Procédé selon l'une des revendications 1 à 4, **caractérisé en ce que** l'on utilise une connectivité de type IP, ou toute connectivité à base de paquets datagramme.

6. - Système pour échanger des informations entre une station principale ou un réseau de zone (10) et au moins un cluster (13) comportant plusieurs stations mobiles (14) reliées entre elles, chaque station mobile étant équipée d'un dispositif de routage, d'un dispositif de transmission des informations comportant au moins un émetteur et un récepteur, ledit cluster étant relié au réseau de zone au moyen d'un réseau longue portée (12) **caractérisé en ce qu'**il comporte au moins :
• une connectivité interne à haut débit (18, 19) entre les différentes stations mobiles (14),
• un équipement (17) adapté à discriminer parmi l'ensemble des paquets IP émis par la station principale ou le réseau de zone (10) et reçus par chacun des récepteurs des stations mobiles, et pour un type de paquets donné, le premier paquet bien reçu de chacun d'entre eux et à désigner la station mobile ayant reçu ce premier paquet retenu Pr, comme chemin de retour préféré des paquets à destination du réseau de zone.

7. - Système selon la revendication 6, **caractérisé en ce que** le débit de la connectivité interne est de plusieurs fois le débit de la connectivité longue portée, de préférence la valeur du rapport du débit inter-stations mobiles et du débit du réseau longue portée est supérieure à 10.

8. - Système selon l'une des revendications 6 et 7, **caractérisé en ce que** l'équipement de discrimination et d'attribution du-chemin de retour préféré-est un équipement frontal (17) implanté dans la fonction de routage constituée par l'ensemble des routeurs physiques de chacun des véhicules.

9. - Système selon l'une des revendications 6 à 8, **caractérisé en ce que** la connectivité interne entre les stations mobiles est de niveau MAC à haut débit entre les émetteurs/récepteurs et les routeurs

10. - Utilisation du procédé selon l'une des revendications 1 à 5 ou du système selon l'une des revendications 6 à 9, dans un système comportant un moyen de télécommunication supporté par la station principale et plusieurs stations mobiles.

## Claims

1. Method for exchanging information between at least one cluster (13) comprising several mobile stations (14) and at least one main station, or an area network (10), the cluster or clusters (13) being linked with the main station or the area network (10), by means of a long-range link (12), **characterized in that** it comprises at least one step for the transmission of pieces of information from the main station or the area network (10) to the cluster by means of a routing channel determined on the basis of an existing internal connectivity (LAN) between the different mobile stations and means (17) suitable for determining, at the level of the reception by each mobile station (14) of a cluster and out of a given type of information, the first piece of information correctly received by a mobile station, identifying this mobile station and associating with it the preferred reverse path to be taken by all or most of the pieces of information to be transmitted from the cluster to the main station or the area network.

2. Method according to Claim 1, **characterized in that** the value of the ratio of the bit rate between mobile stations and the bit rate of the long-range network is greater than 10.

3. Method according to one of Claims 1 or 2, **characterized in that** the pieces of information take the form of packets of IP packet type and, the mobile stations of the cluster being linked by means of an internal high bit rate connectivity, **in that** it comprises at least the following steps:
a) Receiving, at each mobile station (14), the IP packets sent by the main station or the area network (10), and determining the first packet correctly received by the receiver of a mobile station, said first packet being the chosen packet Pr,
b) Identifying the receiver associated with the first chosen packet and the corresponding transmitter of the mobile station,
c) Assigning said identified mobile station the preferred return path to be taken by the different IP packets to be sent to the main station or the area network via the long-range link.

4. Method according to Claim 1, **characterized in that** the step a) for determining the first received packet consists, for a given packet type, in choosing the first of the packets correctly received and rejecting the other identical packets.

5. Method according to one of Claims 1 to 4, **characterized in that** an IP type connectivity, or any connectivity based on datagram packets, is used.

6. System for exchanging information between a main station or an area network (10) and at least one cluster (13) comprising several mobile stations (14) connected to each other, each mobile station being equipped with a routing device, an information transmission device comprising at least one transmitter and one receiver, said cluster being connected to the area network by means of a long-range network (12), **characterized in that** it comprises at least:
an internal high bit rate connectivity (18, 19) between the different mobile stations (14),
- an item of equipment (17) suitable for distinguishing, out of all the IP packets sent by the main station or the area network (10) and received by each of the receivers of the mobile stations, and for a given packet type, the first correctly received packet of each of them and for designating the mobile station that has received this first chosen packet Pr, as the preferred return path of the packets addressed to the area network.

7. System according to Claim 6, **characterized in that** the bit rate of the internal connectivity is several times the bit rate of the long-range connectivity, preferably the value of the ratio of the bit rate between mobile stations and the bit rate of the long-range network is greater than 10.

8. System according to Claim 6 or 7, **characterized in that** the equipment for distinguishing and assigning the preferred return path is a front-end device (17) implanted in the routing function formed by the set of physical routers of each of the vehicles.

9. System according to one of Claims 6 to 8, **characterized in that** the internal connectivity between the mobile stations has a high bit rate MAC level between the transmitters/receivers and the routers.

10. Use of the method according to one of Claims 1 to 5 or of the system according to one of Claims 6 to 9, in a system comprising a telecommunication means supported by the main station and several mobile stations.

## Patentansprüche

1. Verfahren zum Austausch von Informationen zwischen mindestens einem Cluster (13) mit mehreren Mobilstationen (14) und mindestens einer Hauptstation oder einem Bereichsnetz (10), wobei der oder die Cluster (13) mit der Hauptstation oder dem Bereichsnetz (10) mittels einer Verbindung großer Reichweite (12) verbunden sind, **dadurch gekennzeichnet, dass** es mindestens einen Schritt der Übertragung der Informationen von der Hauptstation oder dem Bereichsnetz (10) zum Cluster mit Hilfe eines bestimmten Routingkanals ausgehend von einer existierenden internen Konnektivität (LAN) zwischen den verschiedenen Mobilstationen und von Mitteln (17) aufweist, die ausgelegt sind, um auf der Ebene des Empfangs durch jede Mobilstation (14) eines Clusters und unter einem Typ von gegebenen Informationen die erste korrekt von einer Mobilstation empfangene Information zu bestimmen, diese Mobilstation zu identifizieren und ihr den bevorzugten umgekehrten Pfad zuzuordnen, den alle oder die meisten der vom Cluster zur Hauptstation oder zum Bereichsnetz zu übertragenden Informationen benutzen sollen.

2. Verfahren nach Anspruch 1, **dadurch gekennzeichnet, dass** der Wert des Verhältnisses zwischen dem Durchsatz zwischen Mobilstationen und dem Durchsatz des Netzes mit großer Reichweite größer als 10 ist.

3. Verfahren nach einem der Ansprüche 1 und 2, **dadurch gekennzeichnet, dass** die Informationen in Form von Paketen vom Typ IP-Pakete vorliegen und wobei die Mobilstationen des Clusters mittels einer internen Konnektivität mit hohem Durchsatz verbunden sind, dass es mindestens die folgenden Schritte aufweist:
a) Empfang auf der Ebene jeder Mobilstation (14) der IP-Pakete, die von der Hauptstation oder dem Bereichsnetz (10) gesendet werden, und Bestimmen des ersten korrekt vom Empfänger einer Mobilstation empfangenen Pakets, wobei das erste Paket das zurückbehaltene Paket Pr ist,
b) Identifizierung des dem ersten zurückbehaltenen Paket zugeordneten Empfängers und des entsprechenden Senders der Mobilstation,
c) Zuweisung zur identifizierten Mobilstation des bevorzugten von den verschiedenen IP-Paketen zu benutzenden Rückpfads, die über die Verbindung großer Reichweite zur Hauptstation oder zum Bereichsnetz zu senden sind.

4. Verfahren nach Anspruch 1, **dadurch gekennzeichnet, dass** der Schritt a) zur Bestimmung des ersten empfangenen der Pakete für einen gegebenen Pakettyp darin besteht, das erste richtig empfangene der Pakete zurückbehalten und die anderen gleichen Pakete zurückzuweisen.

5. Verfahren nach einem der Ansprüche 1 bis 4, **dadurch gekennzeichnet, dass** eine Konnektivität vom Typ IP oder eine beliebige Konnektivität auf der Basis von Datagramm-Paketen verwendet wird.

6. System zum Austausch von Informationen zwischen einer Hauptstation oder einem Bereichsnetz (10) und mindestens einem mehrere miteinander verbundene Mobilstationen (14) aufweisenden Cluster (13), wobei jede Mobilstation mit einer Routingvorrichtung, mit einer Übertragungsvorrichtung der Informationen, die mindestens einen Sender und einen Empfänger aufweist, ausgerüstet ist, wobei der Cluster mit dem Bereichsnetz mittels eines Netzes mit großer Reichweite (12) verbunden ist, **dadurch gekennzeichnet, dass** es mindestens aufweist:
. eine interne Konnektivität mit hohem Durchsatz (18, 19) zwischen den verschiedenen Mobilstationen (14),
. eine Ausrüstung (17), die ausgelegt ist, um unter der Gesamtheit der von der Hauptstation oder dem Bereichsnetz (10) gesendeten und von jedem der Empfänger der Mobilstationen empfangenen IP-Pakete und für einen gegebenen Pakettyp das erste von jedem von ihnen richtig empfangene Paket zu diskriminieren und die Mobilstation, die dieses erste zurückbehaltene Paket Pr empfangen hat, als bevorzugten Rückpfad der Pakete in Richtung des Bereichsnetzes zu bezeichnen.

7. System nach Anspruch 6, **dadurch gekennzeichnet, dass** der Durchsatz der internen Konnektivität ein Mehrfaches des Durchsatzes der Konnektivität mit großer Reichweite ist, vorzugsweise ist der Wert des Verhältnisses zwischen dem Durchsatz zwischen Mobilstationen und dem Durchsatz des Netzes mit großer Reichweite größer als 10.

8. System nach einem der Ansprüche 6 und 7, **dadurch gekennzeichnet, dass** die Ausrüstung zur Diskriminierung und zur Zuweisung des bevorzugten Rückpfads eine Front-End-Ausrüstung (17) ist, die in die Routingfunktion implantiert ist, die aus der Gesamtheit der physikalischen Router jedes der Fahrzeuge besteht.

9. System nach einem der Ansprüche 6 bis 8, **dadurch gekennzeichnet, dass** die interne Konnektivität zwischen den Mobilstationen eine Konnektivität der MAC-Ebene mit hohem Durchsatz zwischen den Sender/Empfängern und den Routern ist.

10. Verwendung des Verfahrens nach einem der Ansprüche 1 bis 5 oder des Systems nach einem der Ansprüche 6 bis 9 in einem System, das eine Telekommunikationseinrichtung aufweist, die von der Hauptstation und mehreren Mobilstationen getragen wird.
